(19) **Europäisches Patentamt / European Patent Office / Office européen des brevets**

(11) **EP 4 159 700 A1**

(12) # EUROPEAN PATENT APPLICATION
published in accordance with Art. 153(4) EPC

(43) Date of publication:
**05.04.2023 Bulletin 2023/14**

(21) Application number: **21813662.0**

(22) Date of filing: **14.05.2021**

(51) International Patent Classification (IPC):
**C04B 14/04** (2006.01)        **C04B 18/08** (2006.01)
**C04B 28/26** (2006.01)

(52) Cooperative Patent Classification (CPC):
**C04B 14/04; C04B 18/08; C04B 28/26;**
**Y02W 30/91**

(86) International application number:
**PCT/JP2021/018413**

(87) International publication number:
**WO 2021/241279 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.05.2020  JP 2020092393**

(71) Applicants:
• **Fujimi Incorporated**
  **Kiyosu-shi, Aichi 452-8502 (JP)**
• **Obayashi Corporation**
  **Tokyo 108-8502 (JP)**
• **Nagoya Institute Of Technology**
  **Nagoya-shi, Aichi 466-0061 (JP)**

(72) Inventors:
• **HAYAKAWA, Takashi**
  **Kiyosu-shi, Aichi 452-8502 (JP)**
• **MIWA, Naoya**
  **Kiyosu-shi, Aichi 452-8502 (JP)**
• **ASHITAKA, Keiji**
  **Kiyosu-shi, Aichi 452-8502 (JP)**
• **HITOMI, Takashi**
  **Kiyose-shi, Tokyo 204-8558 (JP)**
• **TAGUCHI, Nobuko**
  **Kiyose-shi, Tokyo 204-8558 (JP)**
• **SHIRAI, Takashi**
  **Nagoya-shi, Aichi 466-0061 (JP)**
• **XIN, Yunzi**
  **Nagoya-shi, Aichi 466-0061 (JP)**

(74) Representative: **Maiwald GmbH**
**Elisenhof**
**Elisenstraße 3**
**80335 München (DE)**

(54) **HARDENING AID SOLUTION, SELF-HARDENING MATERIAL, AND HARDENED BODY, AND METHODS FOR PRODUCING SAME**

(57)    The present invention provides means capable of imparting high temporal stability to a hardening aid solution which serves as a raw material and capable of imparting high strength and high quality stability to a hardened body of the self-hardening material, in the hardened body of the self-hardening material that contains a ceramic powder containing Si element at least on the surface thereof. The present invention relates to a hardening aid solution containing Si element, an alkali, and a dispersing medium, wherein the dispersing medium contains water; a dissolution concentration of the Si element is 20000 mass ppm or more; the number of moles of the alkali present in 1 kg of the dispersing medium is 2 mol/kg or more; an absolute value of an amount of change in a dissolution concentration of Si element in a solution obtained by diluting the hardening aid solution by 2 times based on the mass using an aqueous KOH solution having a concentration of 3 mol/L is 2000 mass ppm or less, between before and after a heat dissolution test including heating the solution at a solution temperature of 80°C for 5 hours, and then allowing the solution to stand in an ambient environment at 25°C for 1 hour; and the hardening aid solution is used for hardening a powder containing a ceramic powder containing Si element at least on the surface thereof.

EP 4 159 700 A1

**Description**

**TECHNICAL FIELD**

The present invention relates to a hardening aid solution, a self-hardening material, and a hardened body, and methods for producing them.

**BACKGROUND ART**

As self-hardening materials for cement paste, mortar, concrete, and the like, cement-based materials such as normal portland cement are widely used. Cement clinker which is a raw material of cement included in cement-based materials is obtained by mixing limestone with clay and firing them. Accordingly, carbon dioxide is released through firing of limestone and carbon dioxide is released through combustion of heavy oil fuel. Thus, it is said that 1 ton of carbon dioxide is generated to fire 1 ton of cement clinker. In recent years, global warming is a worldwide problem, and the restriction on the release of carbon dioxide is an important problem to be solved. In the cement-based material, calcium hydroxide is generated by the hydration reaction during hardening. Thus, when the cement-based material is used to construct underground facilities such as storage facilities, the water in contact with a hardened body of the cement-based material exhibits alkalinity. Here, when bentonite is used as a water stopping material, a change in quality in an alkali environment is concerned. The same concern applies to the surrounding base rock. Therefore, development of a new alternative technique in place of the cement-based material is desired.

Examples of the alternative material for the cement-based material include self-hardening materials that contain a ceramic powder containing Si element. Among such self-hardening materials, a mixture of a ceramic powder containing Si element at least on the surface thereof and a solution containing an alkali and a silicon powder that may be the hardening aid solution to the ceramic powder is examined, from the viewpoint of excellent denseness and strength.

Japanese Patent Laid-Open No. 2015-218070 discloses a method for producing a self-hardening material, including mixing a fly ash whose surface is activated by mechanochemical treatment and a silicon mixture obtained by mixing a strong alkaline solution with a silicon powder in which the silicon component is eluted in a strong alkaline solution. It also discloses that a self-hardening material capable of obtaining a hardened body having high denseness is provided by the production method.

Japanese Patent Laid-Open No. 2016-222528 discloses a method for producing a hardened body including mixing a fly ash with a slurry obtained by mixing a potassium hydrate solution having a concentration of 3 mol/L with a specific silicon powder to obtain a mixture, followed by hardening the mixture. It also discloses that a hardened body having high strength can be obtained by the production method.

**SUMMARY OF INVENTION**

The hardened body of the self-hardening material obtained by the production method according to Japanese Patent Laid-Open No. 2015-218070 and the hardened body produced by the production method according to Japanese Patent Laid-Open No. 2016-222528 have excellent strength. However, a demand for a hardened body having higher strength has recently increased, and at the same time, a demand for higher quality stability than before has also increased.

Therefore, an object of the present invention is to provide means capable of imparting high temporal stability to a hardening aid solution which serves as a raw material and capable of imparting high strength and high quality stability to a hardened body of the self-hardening material, in the hardened body of the self-hardening material that contains a ceramic powder containing Si element at least on the surface thereof.

At least one of the above problems of the present invention can be solved by the following means.

A hardening aid solution containing Si element, an alkali, and a dispersing medium, wherein

the dispersing medium contains water;
a dissolution concentration of the Si element is 20000 mass ppm or more;
the number of moles of the alkali present in 1 kg of the dispersing medium is 2 mol/kg or more;
an absolute value of an amount of change in a dissolution concentration of Si element in a solution obtained by diluting the hardening aid solution by 2 times based on the mass using an aqueous KOH solution having a concentration of 3 mol/L is 2000 mass ppm or less, between before and after a heat dissolution test including heating the solution at a solution temperature of 80°C for 5 hours, and then allowing the solution to stand in an ambient environment at 25°C for 1 hour; and
the hardening aid solution is used for hardening a powder containing a ceramic powder containing Si element at least on the surface thereof.

**DESCRIPTION OF EMBODIMENTS**

Hereinafter, the present invention will be described. The present invention is not limited to the following embodiments.

As used herein, "X to Y" indicating a range means "X or more and Y or less". As used herein, unless otherwise indicated, operations and measurement of physical properties and the like are performed under conditions of room temperature (20 to 25°C) /relative humidity of 40 to 50% RH.

One aspect of the present invention relates to a hardening aid solution containing Si element, an alkali, and a dispersing medium, wherein the dispersing medium contains water; a dissolution concentration of the Si element is 20000 mass ppm or more; the number of moles of the alkali present in 1 kg of the dispersing medium is 2 mol/kg or more; an absolute value of an amount of change in a dissolution concentration of Si element in a solution obtained by diluting the hardening aid solution by 2 times based on the mass using an aqueous KOH solution having a concentration of 3 mol/L is 2000 mass ppm or less, between before and after a heat dissolution test including heating the solution at a solution temperature of 80°C for 5 hours, and then allowing the solution to stand in an ambient environment at 25°C for 1 hour; and the hardening aid solution is used for hardening a powder containing a ceramic powder containing Si element at least on the surface thereof. The present aspect provides means capable of imparting high temporal stability to a hardening aid solution which serves as a raw material and capable of imparting high strength and high quality stability to the hardened body of the self-hardening material, in the hardened body of the self-hardening material that contains a ceramic powder containing Si element at least on the surface thereof.

The present inventors presume the mechanism of why the above problems are solved by the present invention as follows.

Conventionally, in a hardening aid solution that contains a compound containing Si element and an alkali, insoluble residue of the compound containing Si element has remained. As a result, the dissolution concentration of the Si element in the hardening aid solution has changed depending on the mixing time during the preparation of the hardening aid solution and the time from the preparation of the hardening aid solution until mixing with an object to be hardened. Thus, it has been impossible to make the strength of the hardened body of the self-hardening material to a constant strength, unless the conditions for the preparation of the hardening aid solution and mixing of the object to be hardened are properly controlled, and it has been difficult to obtain a hardened body having high strength and high quality stability. In contrast, in the hardening aid solution according to the present invention, the dissolution concentration of the Si element is 20000 mass ppm or more and the number of moles of alkali present in 1 kg of the dispersing medium is 2 mol/kg or more. When the alkali concentration falls within the above range, dissolution of the compound containing Si element in the hardening aid solution is further promoted. Consequently, the amount of the Si element dissolved can be further improved, and the occurrence of the insoluble residue of the compound containing Si element in the hardening aid solution can be further prevented. This improves the temporal stability of the hardening aid solution and self-hardening material containing the hardening aid solution, enables a hardened body having always a constant strength to be produced, and prevents the production of a hardened body that is poor in strength, so that a hardened body having further high quality stability and strength can be obtained.

When the dissolution concentration of the Si element falls within the above range, the amount of the Si element in the hardening aid solution becomes sufficient and the function as the hardening aid further increases. Then, in the self-hardening material having predetermined alkalinity, the reaction relating to the Si element on the surface of the ceramic powder and the eluted Si element derived from the hardening aid solution sufficiently progresses between these Si elements, so that the hardening of the ceramic powder progresses. As a result, a hardened body having further high strength can be obtained.

Then, if the insoluble residue of the compound containing Si element is present in a conventional hardening aid solution, sedimentation of the insoluble residue makes the existing state of the hardening aid non-uniform in the hardening aid solution and the self-hardening material containing the hardening aid solution. Since elution occurs from the insoluble residue, the dissolution concentration of the compound containing Si element in the hardening aid solution may vary with time. In this case, since the composition of the self-hardening material and the hardened body thereof varies depending on the location or with time and the quality such as strength is also non-uniform, it has been difficult to obtain a hardened body having high strength and high quality stability. In contrast, in the hardening aid solution according to the present invention, when the solution obtained by diluting the hardening aid solution by 2 times based on the mass using an aqueous KOH solution having a concentration of 3 mol/L (solution diluted with an aqueous alkaline solution) is subjected to a heat dissolution test including heating the solution at a solution temperature of 80°C for 5 hours and then allowing the solution to stand in an ambient environment at 25°C for 1 hour, the absolute value of the amount of change in the dissolution concentration of the Si element in the solution of the hardening aid solution diluted with an aqueous alkaline solution is 2000 mass ppm or less, between before and after the heat dissolution test. The absolute value of the amount of change in the dissolution concentration of the Si element between before and after the heat dissolution test within the above range indicates that a dissolution concentration of Si element does not substantially change, even when a solution is heated under conditions in which the compound containing Si element can be dissolved. That is, the absolute value of the amount of change in the dissolution concentration of the Si element between before and after the heat dissolution test within the above range indicates that the insoluble residue of the compound containing Si element is not substantially present in the hardening aid solution. In this case, the dissolution concentration of the Si element does not vary with time and is constant. Thus, the compositions of the self-hardening material and hardened body thereof are uniform, the uniformity of physical properties such as the strength of the hardened body increases, the variation in strength is prevented, and the production of a hardened body that is poor in strength is prevented. Consequently, a hardened body having high strength and further high quality stability can be obtained.

Since the insoluble residue of the compound containing Si element is not present in the hardening aid solution according to the present invention, the preparation thereof does not require an excess raw material (compound containing Si element), which may result in low cost.

The above mechanism is based on a presumption, and the correctness or incorrectness thereof does not affect the technical scope of the present invention. The same applies to other presumptive matters herein, and the correctness or incorrectness thereof does not affect the technical scope of the present invention.

<Hardening aid solution>

(Dissolution concentration of Si element)

The hardening aid solution according to one embodiment of the present invention contains Si element. The Si element dissolved in the hardening aid solution progresses the hardening of the ceramic powder by the reaction generated with the Si element of the ceramic powder containing Si element at least on the surface thereof, and contributes to the formation of a hardened body.

In the hardening aid solution according to one embodiment of the present invention, the dissolution concentration of the Si element is 20000 mass ppm or more. When the dissolution concentration of the Si element is less than 20000 mass ppm, sufficient strength cannot be obtained in the hardened body of the self-hardening material. This is presumed that the amount of the Si element in the hardening aid solution is insufficient and the function as the hardening aid is thus not sufficiently exerted. The dissolution concentration of the Si element is more preferably 30000 mass ppm or more. When the dissolution concentration of the Si element falls within the above range, the hardenability of the hardener and the strength of the hardened body of the self-hardening material are further improved. The dissolution concentration of the Si element is preferably 120000 mass ppm or less. When the dissolution concentration of the Si element falls within the above range, an excess increase in the viscosity of the aid itself is further prevented, and the occurrence of gelation which is inappropriate for use is further prevented.

From the viewpoint of the strength of the hardened body, the dissolution concentration of the Si element is further preferably 35000 mass ppm or more, still more preferably 40000 mass ppm or more, particularly preferably 70000 mass ppm or more, and most preferably 90000 mass ppm or more.

From the viewpoint of the shape change rate of the hardened body, the dissolution concentration of the Si element is more preferably 100000 mass ppm or less, further preferably 50000 mass ppm or less, and particularly preferably 35000 mass ppm or less.

The dissolution concentration of the Si element in the hardening aid solution can be controlled by the amount used of the compound containing Si element which is a raw material to be used in the dissolution, the amount added of alkali relating to the solubility of the Si element, the pH value. For example, the dissolution concentration of the Si element can be increased by increasing the amount used of the compound containing Si element, increasing the amount of alkali added, increasing the pH value.

In the hardening aid solution according to one embodiment of the present invention, the absolute value of the amount of change in the dissolution concentration of the Si element in the solution obtained by diluting the hardening aid solution by 2 times based on the mass using an aqueous KOH solution having a concentration of 3 mol/L (solution diluted with an aqueous alkaline solution) is 2000 mass ppm or less (the lower limit is 0 mass ppm), between before and after a heat dissolution test including heating the solution at a solution temperature of 80°C for 5 hours, and then allowing the solution to stand in an ambient environment at 25°C for 1 hour. When the absolute value of the amount of change is more than 2000 mass ppm, the dissolution concentration of the Si element varies with time. Consequently, the temporal stability of the hardening aid solution and self-hardening material and the uniformity of the composition are insufficient, so that the quality stability and strength of the hardened body are insufficient. The reason is presumed that, when the absolute value of the amount of change is more than 2000 mass ppm, the compound containing Si element is not completely dissolved and the insoluble residue is present in the hardening aid solution, and in this case, the Si element is continuously eluted from the compound containing Si element in the form of silicate ion and the like.

Usually, in the hardening aid solution according to one embodiment of the present invention, there is no case where the insoluble residue of the compound containing Si element is present and the absolute value of the amount of change in the dissolution concentration of the Si element in the solution of the hardening aid solution diluted with an alkali is 2000 mass ppm or less, between before and after the heat dissolution test. If the insoluble residue of the compound containing Si element is present in the hardening aid solution, this state where the insoluble residue is present is no longer an equilibrium state due to the dilution with an aqueous KOH solution having a concentration of 3 mol/L at the time of the heat dissolution test, that is, the addition of alkali. This is because this hardening aid solution after dilution causes a concentration change due to the subsequent heating.

The absolute value of the amount of change in the dissolution concentration of the Si element between before and after the heat dissolution test can be made smaller by adding an amount of alkali sufficient to eliminate the insoluble residue in a sufficient concentration based on the amount used of the compound containing Si element which is a raw material to be used in the dissolution.

The dissolution concentration of the Si element can be measured as follows. The solution to be a measurement object (e.g., a hardening aid solution and a diluted hardening aid solution) is subjected to centrifugation at 81769 G for 30 minutes using a centrifugal machine (Avanti HP-301 manufactured by Beckman Coulter) to collect the supernatant. Subsequently, the collected supernatant is diluted with pure water by a predetermined factor, which is subjected to inductively coupled plasma atomic emission spectroscopy using an inductively coupled plasma atomic emission spectrometer (SPS3510 manufactured by Hitachi High-Technologies Corporation). Based on the calibration curve prepared by using a silicon standard stock solution (manufactured by Kanto Chemical Co., Inc.), the dissolution concentration of the Si element [mass ppm] in the diluted supernatant is measured. Then, the value corresponding to the product of the obtained value and the dilution factor of the supernatant with pure water based on the mass is taken as the dissolution concentration of the Si element [mass ppm], thereby evaluating the dissolution concentration. Here, the dilution factor of the supernatant with pure water based on the mass is not particularly limited, but for example, may be 2000 times. The detail of the evaluation method of the dissolution concentration of the Si element and the detail of the heat dissolution test will be described in Examples.

In the present invention, the existing state of the Si element dissolved in the hardening aid solution is not particularly limited. Examples thereof include the state of silicate ions.

A Q3 rate of the silicate ion in the hardening aid solution according to one embodiment of the present invention is not particularly limited, but is preferably 45% or less (the lower limit is 0%). Regarding the Q3 rate, the proportion of the area of the peak derived from the Si element in a $SiO_4$ tetrahedron in which three of O elements are shared with adjacent Si elements (that is, the peak derived from a $Si-(OH)_1$ structure) (Q3) relative to the total area of the peak areas of the peak derived from the Si element in a $SiO_4$ tetrahedron in which four of O elements are shared with adjacent Si elements (Q4), the peak derived from the Si element in a $SiO_4$ tetrahedron in which three of O elements are shared with adjacent Si elements (Q3), the peak derived from the Si element in a $SiO_4$ tetrahedron in which two of O elements are shared with adjacent Si elements (Q2), the peak derived from the Si element in a $SiO_4$ tetrahedron in which one O element is shared with an adjacent Si element (Q1), and the peak derived from the Si element in a $SiO_4$ tetrahedron in which all the O elements are not shared with adjacent Si elements (Q0) is represented by the Q3 rate [%]. When the Q3 rate falls within the above range, the shape change rate of the hardened body of the self-hardening material containing the hardening aid solution, in particular, the shape change rate of the hardened body of the self-hardening material with a high content of moisture is further reduced.

Each peak area of the above Q0 to the above Q4 used for the calculation of the Q3 rate of the silicate ion can be measured as follows. The above hardening aid solution is subjected to liquid state $^{29}$Si NMR measurement using a superconductive high-resolution nucleus magnetic resonance spectrometer (ECZ700R manufactured by JEOL RESONANCE Co., Ltd.) under conditions of Offset: -90 ppm, Sweep: 40 ppm, Points: 4096, Scans: 256, and Relaxation: 120 s. The detail of the evaluation method of the Q3 rate of the silicate ion will be described in Examples.

The source of the Si element dissolved in the hardening aid solution, that is, the compound containing Si element which serves as a raw material is not particularly limited, as long as the compound can provide dissolved Si elements under the presence of the alkali described below. Examples thereof include a silicon single body, and an oxide, nitride, carbide, oxynitride, nitrocarbide, and oxynitrocarbide containing silicon. These may be preferably in powder form. Thus, preferred examples of the compound containing Si element include silicon oxide (silica) powder, silicon nitride powder, silicon carbide powder, silicon oxynitride powder, silicon carbonitride powder, and polysilicon powder. Examples thereof also include silicic acids such as orthosilicic acid, pyrosilicic acid, metasilicic acid, and metadisilicic acid, and silicate salts such as potassium silicate ($K_2SiO_3$) and sodium silicate ($Na_2SiO_3$). Among these, silica or a silicon single body is preferable, amorphous silica is more preferable, and a silica fume containing amorphous silica as the main component is further preferable. By using such a preferred compound containing Si element, the temporal stability and uniformity of the composition of the hardening aid solution and self-hardening material are further improved, so that the quality stability and strength of the hardened body are further improved. By using the amorphous silica powder, the shape change rate of the hardened body of the self-hardening material, in particular, the shape change rate of the hardened body of the self-hardening material with a high content of moisture is further improved.

The compound containing Si element preferably does not contain a silicic acid alkali metal salt or a silicic acid group 2 metal salt. When these are not included, the shape change rate of the hardened body of the self-hardening material, in particular, the shape change rate of the hardened body of the self-hardening material with a high content of moisture is further improved. In the hardening aid solution according to one preferred embodiment of the present invention, the compound containing Si element includes neither a silicic acid alkali metal salt nor a silicic acid group 2 metal salt.

As the compound containing Si element, a commercial product or a synthetic product may be used. Examples of the commercial product include a silica fume powder, which is an amorphous silica powder containing an amorphous silica as the main component, Elkem Micro Silica (registered trademark) 940U (Elkem 940U) manufactured by Elkem Japan K.K.

The compound containing Si element may be used singly or in combination of two or more.

In the hardening aid solution according to one embodiment of the present invention, it seems that the entire compound containing Si element is dissolved and the compound in powder form such as particles, that is, the insoluble residue is not present.

(Alkali)

The hardening aid solution according to one embodiment of the present invention contains an alkali. Alkali refers to a compound having a function of increasing the pH of the hardening aid solution by being added to the solution. That is, in the preparation of the hardening aid solution, the addition of alkali can increase the pH of the hardening aid solution to be prepared. Alkali contributes to allow the compound containing Si element to be sufficiently dissolved in the hardening aid solution.

In the hardening aid solution according to one embodiment of the present invention, the number of moles of alkali present in 1 kg of the dispersing medium (hereinafter, also referred to as the "molality of alkali") is 2 mol/kg or more. When the molality of alkali is less than 2 mol/kg, the hardened body of the self-hardening material cannot obtain sufficient strength. This is presumed to be because the compound containing Si element which is a raw material of the hardening aid solution does not sufficiently dissolve in the hardening aid solution and the Si element cannot sufficiently elute, and thus the function as the hardening aid is not sufficiently exerted. In addition, since the insoluble residue of the compound containing Si element is significantly increased, it is presumed to be because the Si element is continuously eluted from the insoluble residue in the form of silicate ions and the like and the dissolution concentration of the Si element changes with time, so that the temporal stability and uniformity of the composition of the hardening aid solution and self-hardening material decrease and the quality stability and strength of the hardened body decrease. The lower limit of the molality of alkali is preferably 2.5 mol/kg or more, and more preferably 3 mol/kg or more. Within the above range, the temporal stability and uniformity of the composition of the hardening aid solution and self-hardening material are further improved and the quality stability and strength of the hardened body are also further improved. The upper limit of the molality of alkali is not particularly limited, but is preferably 8 mol/kg or less, and more preferably 6 mol/kg or less. Within the above range, the safety of the hardening aid solution and self-hardening material containing the hardening aid solution is further improved.

As used herein, the molality of alkali refers to the number of moles of alkali present in 1 kg of the dispersing medium. The molality of alkali in the hardening aid solution can be calculated by obtaining a value of the measurement result of the concentration of alkali metal ions in the hardening aid solution using the inductively coupled plasma atomic emission spectroscopy in terms of the number of moles of alkali metal ions in 1 kg of the hardening aid solution, and then dividing the value by the mass fraction of the dispersing medium in the hardening aid solution that is calculated from the mass reduction when the hardening aid solution is volatilized and dried. When the formulation of the hardening aid solution is simple, the molality of alkali in the hardening aid solution can be calculated by calculating the number of moles of alkali present in 1 kg of the dispersing medium [mol/kg] from the number of moles or mass of the alkali used, the mass of the dispersing medium, the molecular weight of alkali [g/mol], and the like. The molality of alkali in the hardening aid solution can also be calculated by subjecting the hardening aid solution to centrifugation, then collecting the supernatant, adding a methyl orange indicator to the collected supernatant, and titrating the mixture with hydrochloric acid to obtain the amount used.

The alkali is not particularly limited, and a known one can be used. Examples thereof include hydroxides of an alkali metal and a group 2 metal. Examples of the hydroxide of the alkali metal include potassium hydrate and sodium hydroxide. Examples of the hydroxide of the group 2 metal include magnesium hydroxide and calcium hydroxide. Among these, the alkali is more preferably a hydroxide of an alkali metal, further preferably potassium hydrate or sodium hydroxide, and particularly preferably potassium hydrate. By using such a preferred alkali, the temporal stability and uniformity of the composition of the hardening aid solution and self-hardening material are further improved, and the quality stability and strength of the hardened body are also further improved.

As the alkali, a commercial product or a synthetic product may be used.

The alkali may be used singly or in combination of two or more.

(Dispersing medium)

The hardening aid solution according to one embodiment of the present invention contains a dispersing medium. The dispersing medium allows each component to be dispersed or dissolved.

The dispersing medium contains water. The water expresses alkalinity by dissolving alkali, and contributes to dissolve the compound containing Si element. The water is preferably water containing impurities as little as possible. For example, water having a total content of transition metal ions of 100 ppb or less is preferred. Here, the purity of water can be increased by, for example, removing impurity ions using an ion exchange resin, removing foreign substances by a filter, and operations such as distillation. Specifically, for example, deionized water (ion exchange water), pure water, ultrapure water, or distilled water is preferably used as water.

The dispersing medium other than water may be an organic solvent for dispersion or dissolution of each component. In this case, preferred examples of the organic solvent to be used include acetone, acetonitrile, ethanol, methanol, isopropanol, glycerin, ethylene glycol, and propylene glycol which are organic solvents capable of being mixed with water. The organic solvent may be used without mixing with water, and may be mixed with water after each component is dispersed or dissolved. These organic solvents may be used singly or in combination of two or more.

Here, the content of water in the dispersing medium is preferably 50% by mass or more, more preferably 80% by mass or more, and further preferably 100% by mass (only water) (the upper limit is 100% by mass), based on the total mass of the dispersing medium.

(Method for producing hardening aid solution)

The method for producing the above hardening aid solution is not particularly limited, and known methods can be used. Among them, a method including mixing a compound containing Si element with an alkaline solution having the number of moles of alkali present in 1 kg of a dispersing medium of 2 mol/kg or more and containing water to obtain a mixed solution is preferred.

Here, the compound containing Si element, the alkali, and the dispersing medium are as described above. As described above, it is preferred that the method for producing the above hardening aid solution do not include mixing a silicic acid alkali metal salt or a silicic acid group 2 metal salt as the compound containing Si element. The production method according to one preferred embodiment of the present invention includes neither mixing a silicic acid alkali metal salt nor mixing a silicic acid 2 metal salt.

The mixing method, procedure, and apparatus are not particularly limited, and a known method, procedure, and apparatus can be appropriately selected and used. The mixing apparatus is not particularly limited, and a conventionally known arbitrary mixing machine and kneader can be used. Examples thereof include a double-arm kneader, a pressure kneader, an Eirich mixer, a super mixer, a planetary mixer, a Banbury mixer, a continuous mixer, and a continuous kneading machine. To extract bubbles, a vacuum clay kneader is preferably used.

The production method according to the present embodiment preferably includes subjecting the above obtained mixed solution to heat treatment. By performing heat treatment, the temporal stability of the hardening aid solution is improved and the temporal stability and uniformity of the composition of the self-hardening material are also improved, so that a hardened body having further high quality stability and strength can be obtained. This is presumed to be because the heat treatment further promotes the dissolution of the compound containing Si element in the hardening aid solution, so that the amount of the Si element dissolved can be further improved and the occurrence of the insoluble residue of the compound containing Si element in the hardening aid solution can also be further prevented.

The heating method, procedure, and apparatus are not particularly limited, and a known method, procedure, and apparatus can be appropriately selected and used.

As for the dissolution conditions, the heating temperature is preferably a solution temperature of 50°C or more, more preferably a solution temperature of 60°C or more, and further preferably a solution temperature of 80°C or more . This is because the higher the temperature is, the more the rate of dissolution of the compound containing Si element increases, so that the compound containing Si element can be dissolved in a shorter time. The heating temperature is preferably a solution temperature of 100°C or less, more preferably a solution temperature of 95°C or less, and further preferably a solution temperature of 90°C or less. This is because when the temperature is too high, the dispersing medium may volatilize during heating and a hardening aid solution having a desired concentration may not be obtained. The heating time is preferably 3 hours or more, more preferably 4 hours or more, and further preferably 5 hours or more. This is because the compound containing Si element can be securely dissolved by heating for a certain time or longer without generating insoluble residue. The heating time is preferably 24 hours or less, more preferably 12 hours or less, and further preferably 8 hours or less. This is because when the dissolution time is too long, the dispersing medium may volatilize during heating and a hardening aid solution having a desired concentration may not be obtained. Accordingly, it is preferred that the method for producing the above hardening aid solution further includes heating the above mixed solution at a solution temperature of 80°C or more and 5 hours or more.

(Object to be hardened)

The hardening aid solution according to one embodiment of the present invention is used to harden a powder including a ceramic powder containing Si element at least on the surface thereof. The Si element dissolved in the hardening aid solution progresses the hardening of the ceramic powder with the Si element of the ceramic powder containing Si element at least on the surface thereof by the reaction relating to these Si elements.

The ceramic powder containing Si element at least on the surface thereof is not particularly limited, and known ones can be used. Among them, aluminosilicate or blast furnace slag is preferred, and aluminosilicate is more preferred. Examples of the aluminosilicate include fly ash, red mud, silica fume, and industrial wastes such as sewage sludge incineration ash. Examples thereof also include natural aluminosilicate minerals and calcined products thereof (e.g., metakaolin) . Examples thereof also include volcanic ashes. Among these, fly ash is preferred from the viewpoint of easy availability and costs. Ceramic powders described in paragraphs "0016" and "0017" in Japanese Patent Laid-Open No. 2008-239433 which are other than those described above may also be used.

The ceramic powder containing Si element at least on the surface thereof preferably contains a ceramic powder having an amorphized surface and containing Si element at least on the surface thereof, more preferably aluminosilicate having an amorphized surface or blast furnace slag having an amorphized surface, further preferably aluminosilicate having an amorphized surface, and particularly preferably fly ash having an amorphized surface. By amorphizing the surface, the surface is activated, the reactivity with the hardening aid solution is further increased, and the strength of the hardened body of the self-hardening material is also further increased. In the amorphous layer, a network structure containing Si element is present in an amorphous state, which is brought into a state likely to be eroded by alkali, and dissolution, reprecipitation, and the like of the Si element in the amorphous layer are more likely to occur. This is presumed to be because the reaction between the Si element dissolved in the hardening aid solution and the Si element in the ceramic powder containing Si element at least on the surface thereof is thus also more likely to occur. The amorphized surface can be verified by observing the reduction in crystal peak intensity by an X-ray diffraction method, or the bonding state of atoms by an X-ray photoelectron spectroscopy or an X-ray absorption fine structure analysis.

As the ceramic powder containing Si element at least on the surface thereof, a commercial product or a synthetic product may be used.

The ceramic powder containing Si element at least on the surface thereof may be used singly or in combination of two or more.

The powder including a ceramic powder containing Si element at least on the surface thereof may include other powders . It may include other components having a form other than powder. The content of the ceramic powder containing Si element at least on the surface thereof based on the total mass of the powder containing a ceramic powder containing Si element at least on the surface thereof is not particularly limited, and is preferably 60% by mass or more, and preferably 100% by mass or less.

As described in the description of the self-hardening material described below, a calcium oxide (CaO) content (as used herein, also referred to as "CaO content") based on the total mass of the powder containing a ceramic powder containing Si element at least on the surface thereof is not particularly limited, and is preferably 15% by mass or less (the lower limit is 0% by mass).

<Self-hardening material>

Another aspect of the present invention relates to a self-hardening material containing the above hardening aid solution and a ceramic powder containing Si element at least on the surface thereof. The self-hardening material has high temporal stability and uniformity of the composition of the self-hardening material, and a hardened body that can be obtained from it has high strength and quality stability.

The self-hardening material is hardened between the Si element dissolved in the above hardening aid solution and the Si element of the ceramic powder containing Si element at least on the surface thereof by the reaction relating to these Si elements. The ceramic powder containing Si element at least on the surface thereof is as described in the description of the object to be hardened of the above hardening aid solution for the description of the ceramic powder containing Si element at least on the surface thereof.

The self-hardening material may contain a powder other than the ceramic powder containing Si element at least on the surface thereof, as long as containing the ceramic powder containing Si element at least on the surface thereof. That is, it can be said that the present embodiment relates to a self-hardening material that contains the above hardening aid solution and the powder containing a ceramic powder containing Si element at least on the surface thereof. In this case, the self-hardening material preferably further contains an aggregate other than the ceramic powder containing Si element at least on the surface thereof, as the powder. Such an aggregate is not particularly limited, and a known coarse aggregate or a fine aggregate can be used.

The calcium oxide (CaO) content (CaO content) based on the total mass of the powder containing the ceramic powder containing Si element at least on the surface thereof is not particularly limited, and is preferably 15% by mass or less (the lower limit is 0% by mass). That is, it is preferred that the self-hardening material contains a powder having a CaO content of 15% by mass or less, and the powder having a CaO content of 15% by mass or less contains the ceramic powder containing Si element at least on the surface thereof. Within the above range, a phenomenon similar to the efflorescence phenomenon which is known to be generated in cement due to Ca is difficult to occur. The CaO content can be, for example, evaluated by X-ray fluorescence.

The method for producing the above self-hardening material is not particularly limited, and known methods can be used. Among them, it is preferably a method including providing the above hardening aid solution or producing a hardening aid solution by the above method for producing the hardening aid solution, subjecting a ceramic powder containing Si element at least on the surface thereof to mechanochemical treatment; and mixing either the provided hardening aid solution or the produced hardening aid solution with the ceramic powder after the mechanochemical treatment.

The mechanochemical treatment refers to the treatment that generates chemical reactions such as crystallization reaction, solid solution reaction, and phase transition reaction, utilizing high energy generated locally by mechanical energy such as friction and compression during the pulverization process of solid substances. When the ceramic powder containing Si element at least on the surface thereof is subjected to mechanochemical treatment, the surface of the ceramic powder containing Si element at least on the surface thereof is activated. That is, a ceramic powder having an amorphized surface and containing Si element at least on the surface thereof can be obtained. By activating the surface by mechanochemical treatment, that is, amorphizing the surface, the reactivity with the hardening aid solution is further increased, and the strength of the hardened body of the self-hardening material is also further increased. This is presumed to be because a network structure containing Si element is present in an amorphous state in the amorphous layer, which is brought into a state likely to be eroded by alkali, and dissolution, reprecipitation, and the like of the Si element from the amorphous layer are likely to occur, so that the reaction between the Si element dissolved in the hardening aid solution and the Si element of the ceramic powder containing Si element at least on the surface thereof is more likely to occur.

In the mechanochemical treatment, it is effective to allow various forces such as impact, friction, compression, and shear to act in combination. The apparatus capable of performing such actions is not particularly limited, and a known apparatus can be used. Examples thereof include mixing apparatuses such as a ball mill, a vibration mill, a planetary ball mill, and a medium stirring mill; pulverizers such as a ball medium mill, a roller mill, and a mortar; and a jet pulverizer that enables mainly forces such as impact and grinding to act on an object to be pulverized. When a ball medium mill is used, the ball is not particularly limited, and a known one can be used. Examples thereof include zirconia ball.

Mechanochemical treatment conditions are not limited, but the mechanochemical treatment is preferably performed until no change with time of the particle size distribution occurs. Performing treatment until no change with time of the particle size distribution occurs is considered that the ceramic powder containing Si element at least on the surface thereof reaches the limit of the size reduction by grinding, and the amorphization by the mechanochemical treatment of the ceramic surface is presumed to be in the most progressed state. When a ball medium mill is used, typically, the rotational speed of the ball medium mill is not particularly limited, as long as conditions are such that sufficient energy can be applied to the powder, but the rotational speed is preferably 200 rpm or more. The upper limit thereof is not particularly limited, as long as it is lower than or equal to the upper limit of the apparatus to be used. The stimulation time is not particularly limited, but is preferably 3 to 24 hours.

Here, the ceramic powder containing Si element at least on the surface thereof is as described in the object to be hardened of the above hardening aid solution for the ceramic powder containing Si element at least on the surface thereof.

The amounts used of the ceramic powder containing Si element at least on the surface thereof and hardening aid solution are preferably the following amounts. The mass of the dispersing medium (e.g., water) in the self-hardening material based on 100 parts by mass of a total mass of the ceramic powder containing Si element at least on the surface thereof in the self-hardening material and the compound containing Si element (e.g., amorphous silica, $K_2SiO_3$) which is used as a raw material of the hardening aid solution (hereinafter, also referred to as W/B) is preferably more than 0 parts by mass, more preferably more than 20 parts by mass, and further preferably more than 25 parts by mass. Within the above range, a sufficient amount of hardening aid solution is added to the ceramic powder containing Si element at least on the surface thereof, and the dissolved Si element in the hardening aid is also sufficiently provided. W/B is preferably 50 parts by mass or less, more preferably 40 parts by mass or less, further preferably 35 parts by mass or less, and particularly preferably 30 parts by mass or less . Within the above range, the strength of the hardened body is further improved, and the shape change rate of the hardened body is further reduced.

However, from the viewpoint of more effectively using the effect of reducing the shape change rate, W/B is preferably 30 parts by mass or more, more preferably 35 parts by mass or more, and further preferably 40 parts by mass or more.

The method for producing the above self-hardening material may include further mixing with an aggregate, after mixing the provided hardening aid solution or the produced hardening aid solution with the ceramic powder containing Si element at least on the surface thereof after mechanochemical treatment (the ceramic powder having an amorphized surface and containing Si element at least on the surface thereof).

The aggregate is not particularly limited, and for example, a known coarse aggregate or a known fine aggregate can be used. The aggregate may be the ceramic powder containing Si element at least on the surface thereof, or an aggregate other than the ceramic powder containing Si element at least on the surface thereof. The ceramic powder containing Si element at least on the surface thereof that can be used as the aggregate is as described in the object to be hardened of the above hardening aid solution for the ceramic powder containing Si element at least on the surface thereof. The aggregate other than the ceramic powder containing Si element at least on the surface thereof is not particularly limited, but for example, a known coarse aggregate that does not include Si element on the surface and a known fine aggregate that does not include Si element on the surface can be used.

As the aggregate, a commercial product or a synthetic product may be used.

The aggregate may be used singly or in combination of two or more.

<Hardened body>

Another aspect of the present invention relates to a hardened body that is the hardened product of the above self-hardening material. The hardened body has high strength.

The strength of the hardened body can be assessed by the evaluation of the compressive strength. When the temporal stability and uniformity of the composition of the above hardening aid solution and the above self-hardening material are high and the effect exhibited by the above hardening aid solution is high, the hardened body can obtain high compressive strength. The compressive strength of the hardened body is preferably 8 N/mm$^2$ or more, more preferably 10 N/mm$^2$ or more, and further preferably 24 N/mm$^2$ or more. The compressive strength of the hardened body can be measured by performing the unconfined compression test using a compression tester (AUTOGRAPH AG-100KNX manufactured by SHIMADZU CORPORATION). The detail of the evaluation method of the compressive strength of the hardened body will be described in Examples.

The smaller the shape change is, the more preferred the hardened body is. That is, the lower the absolute value of the shape change rate of the hardened body is, the more preferred the hardened body is. The hardened body is preferably 6% or less, more preferably 5% or less, further preferably 2% or less, still more preferably 1% or less, particularly preferably 0.5% or less, and most preferably 0.1% or less (the lower limit is 0%). In particular, when W/B of the above self-hardening material is 40 parts by mass or more, the shape change rate preferably falls within the above range. The shape change rate of the hardened body can be calculated as follows. The diameter of the above self-hardening material immediately after being poured into a cylindrical formwork is measured using a caliper. Then, the self-hardening material is subjected to sealed curing at 40°C for 48 hours, then removed from the formwork, and thereafter, further subjected to dry curing at 40°C for 5 days to obtain a hardened body. Subsequently, the diameter of the obtained hardened body is measured using a caliper. Then, the shape change rate [%] is calculated by an expression: [(diameter of hardened body - diameter immediately after pouring)/diameter immediately after pouring] $\times$ 100. The detail of the evaluation method of the shape change rate of the hardened body will be described in Examples.

The method for producing the above hardened body is not particularly limited, and known methods can be used. Among them, the method preferably includes providing the above self-hardening material or producing a self-hardening material by the method for producing the above self-hardening material, and hardening the provided self-hardening material or the produced self-hardening material.

The hardening method, procedure, and apparatus are not particularly limited, and a known method, procedure, and apparatus can be appropriately selected and used.

The method for producing the hardened body is preferably a method that does not include heat curing the self-hardening material after hardening at 50°C or more. Examples thereof include a method in which the above self-hardening material is poured into a cylindrical formwork, subjected to sealed curing at 40°C for 48 hours, then removed from the formwork, and thereafter, further subjected to dry curing at 40°C for 5 days to obtain a hardened body. Particularly when an amorphous silica is used as a raw material of the hardening aid solution to be used for producing the self-hardening material and the ceramic powder containing Si element at least on the surface thereof is subjected to mechanochemical treatment in the production of the self-hardening material, a hardened body having high strength and a low shape change rate can be produced without including heat curing the self-hardening material after hardening at 50°C or more.

The embodiments of the present invention have been described in detail, but they are only exemplary and illustrative purposes and not restrictive, and it is obvious that the scope of the present invention should be interpreted by the accompanying claims.

The present invention includes the following aspects and embodiments:

1. A hardening aid solution containing Si element, an alkali, and a dispersing medium, wherein

the dispersing medium contains water;
a dissolution concentration of the Si element is 20000 mass ppm or more;
the number of moles of the alkali present in 1 kg of the dispersing medium is 2 mol/kg or more;
an absolute value of an amount of change in a dissolution concentration of Si element in a solution obtained by diluting the hardening aid solution by 2 times based on the mass using an aqueous KOH solution having a concentration of 3 mol/L is 2000 mass ppm or less, between before and after a heat dissolution test including heating the solution at a solution temperature of 80°C for 5 hours, and then allowing the solution to stand in an ambient environment at 25°C for 1 hour; and
the hardening aid solution is used for hardening a powder containing a ceramic powder containing Si element at least on the surface thereof;

2. The hardening aid solution according to 1., wherein a silicate ion has a Q3 rate of 45% or less;

3. The hardening aid solution according to 1. or 2., wherein the alkali is at least one selected from the group consisting of a hydroxide of an alkali metal and a hydroxide of a group 2 metal;

4. The hardening aid solution according to any of 1. to 3., wherein the ceramic powder containing Si element at least on the surface thereof contains a ceramic powder having an amorphized surface and containing Si element at least on the surface thereof;

5. The hardening aid solution according to 4., wherein the ceramic powder having an amorphized surface and containing Si element at least on the surface thereof contains a fly ash having an amorphized surface;

6. The hardening aid solution according to any of 1. to 5., wherein the dissolution concentration of the Si element is 120000 mass ppm or less;

7. The hardening aid solution according to any of 1. to 6., wherein the number of moles of the alkali present in 1 kg of the dispersing medium is 6 mol/kg or less;

8. A self-hardening material containing the hardening aid solution according to any of 1. to 7. and a ceramic powder containing Si element at least on the surface thereof;

9. The self-hardening material according to 8. containing a powder having a CaO content of 15% by mass or less, wherein the powder having a CaO content of 15% by mass or less contains the ceramic powder containing Si element at least on the surface thereof;

10. A hardened body being a hardened product of the self-hardening material according to 8. or 9.;

11. A method for producing the hardening aid solution according to any of 1. to 7., including mixing a compound containing Si element with an alkaline solution having the number of moles of alkali present in 1 kg of a dispersing medium of 2 mol/kg or more and containing water to obtain a mixed solution;

12. The method for producing the hardening aid solution according to 11., further including heating the mixed solution at a solution temperature of 80°C or more for 5 hours or more;

13. The method for producing the hardening aid solution according to 11. or 12., wherein the compound containing Si element is an amorphous silica;

14. The method for producing the hardening aid solution according to any of 11. to 13., the method not including mixing a silicic acid alkali metal salt or a silicic acid group 2 metal salt;

15. A method for producing a self-hardening material including:

providing the hardening aid solution according to any of 1. to 7., or producing a hardening aid solution by the method according to any of 11. to 14.;
subjecting a ceramic powder containing Si element at least on the surface thereof to mechanochemical treatment; and
mixing the provided hardening aid solution or the produced hardening aid solution with the ceramic powder after the mechanochemical treatment;

16. The method for producing a self-hardening material according to 15., including further mixing with an aggregate after mixing the provided hardening aid solution or the produced hardening aid solution with the ceramic powder after the mechanochemical treatment;

17. The method for producing a self-hardening material according to 15. or 16., wherein the self-hardening material contains a powder having a CaO content of 15% by mass or less, and the powder having a CaO content of 15% by mass or less contains the ceramic powder containing Si element at least on the surface thereof;

18. A method for producing a hardened body including:

providing the self-hardening material according to 8. or 9., or producing a self-hardening material by the method for producing a self-hardening material according to any of 15. to 17.; and
hardening the provided self-hardening material or the produced self-hardening material;

19. The method for producing a hardened body according to 18., the method not including heat curing the self-hardening material after hardening at 50°C or more.

**Examples**

Hereinafter, the present invention will be described further in detail by way of Examples and Comparative Examples. However, the technical scope of the present invention is not limited to the following Examples only. Unless otherwise indicated, "%" and "part" mean "% by mass" and "parts by mass", respectively.

<Hardening aid solution>

[Preparation of hardening aid solutions 1 to 13]

To an aqueous alkaline solution which is a raw material, a compound containing Si element which is a raw material is added and mixed, and the obtained mixture was stirred under predetermined dissolution conditions to prepare each hardening aid solution. In the preparation of each hardening aid solution, the type of alkali, the concentration of the aqueous alkaline solution, the type of the compound containing Si element, the amount used of the aqueous alkaline solution and the compound containing Si element, and the dissolution conditions are each shown in Table 1 below.
As the amorphous silica in Table 1 below, a silica fume powder, which is a silica powder containing an amorphous silica as the main component, (Elkem 940U manufactured by Elkem Japan K.K) was used.
In Table 1 below, the temperature of the dissolution conditions represents the solution temperature, and except for the preparation of the hardening aid solution No. 13, the solution temperature from the start of the reaction to the end of the reaction was constant.

[Molality of alkali in hardening aid solution]

The number of moles of alkali present in 1 kg of the dispersing medium (water) [mol/kg] was calculated from the amount of alkali used and the amount of dispersing medium (water). The number of moles of alkali present in 1 kg of the dispersing medium (water) [mol/kg] can also be calculated by preparing a hardening aid solution, then subjecting the hardening aid solution to centrifugation, collecting the supernatant, adding a methyl orange indicator to the collected supernatant, and titrating the mixture with hydrochloric acid to obtain the amount used.
The evaluation results of the molality of alkali of the hardening aid solution were shown in Table 2 below.

[Dissolution concentration of Si element]

(1. Dissolution concentration of Si element in hardening aid solution)

The above hardening aid solution after preparation was allowed to stand in an ambient environment at 25°C for 1 hour, and then a part of the hardening aid solution was collected. Then, the collected hardening aid solution was subjected to centrifugation at 81769 G or 30 minutes using a centrifugal machine (Avanti HP-301 manufactured by Beckman Coulter) to collect the supernatant. Subsequently, the supernatant was diluted with pure water by 2000 times based on the mass, which was subjected to inductively coupled plasma atomic emission spectroscopy using an inductively coupled plasma atomic emission spectrometer (SPS3510 manufactured by Hitachi High-Technologies Corporation). Based on the calibration curve prepared by using a silicon standard stock solution (manufactured by Kanto Chemical Co., Inc.), the dissolution concentration of the Si element [mass ppm] in the supernatant diluted by 2000 times was measured. Then, a value obtained by multiplying the obtained value 2000 times was taken as the dissolution concentration of the Si element [mass ppm].

(2. Absolute value of amount of change in dissolution concentration of Si element between before and after heat dissolution test)

The above hardening aid solution after preparation was allowed to stand in an ambient environment at 25°C for 1 hour, and then a part of the hardening aid solution was collected. Then, the collected hardening aid solution was diluted with an aqueous KOH solution having a concentration of 3 mol/L by 2 times based on the mass to prepare a solution diluted with an aqueous alkaline solution.

Subsequently, the obtained solution diluted with an aqueous alkaline solution was subjected to centrifugation in the same manner as the above measurement in 1. Dissolution concentration of Si element in hardening aid solution to collect the supernatant. Then, the supernatant was diluted with pure water by 2000 times based on the mass, which was subjected to inductively coupled plasma atomic emission spectroscopy in the same manner as the above measurement in 1. Dissolution concentration of Si element in hardening aid solution. Then, a value obtained by multiplying the obtained value 2000 times was taken as the dissolution concentration of the Si element [mass ppm] before the heat dissolution test.

The above obtained solution diluted with an aqueous alkaline solution was subjected to a heat dissolution test including heating the solution at a solution temperature of 80°C for 5 hours, and then allowing the solution to stand in an ambient environment at 25°C for 1 hour. The diluted solution after the heat dissolution test was subjected to centrifugation in the same manner as the above measurement in 1. Dissolution concentration of Si element in hardening aid solution to collect the supernatant. Then, the supernatant was diluted with pure water by 2000 times based on the mass, which was subjected to inductively coupled plasma atomic emission spectroscopy in the same manner as the above measurement in 1. Dissolution concentration of Si element in hardening aid solution. Then, a value obtained by multiplying the obtained value 2000 times was taken as the dissolution concentration of the Si element [mass ppm] after the heat dissolution test.

Then, the absolute value of the amount of change in the dissolution concentration of the Si element [mass ppm] between before and after the heat dissolution test was calculated from the values of the dissolution concentration of the Si element before and after the heat dissolution test.

(3. Dissolution concentration of Si element of hardening aid solution after 24 hours)

The above hardening aid solution after preparation was allowed to stand in an ambient environment at 25°C for 24 hours, and then a part of the hardening aid solution was collected. Then, the collected hardening aid solution was subjected to centrifugation in the same manner as the above measurement in 1. Dissolution concentration of Si element in hardening aid solution to collect the supernatant, and the supernatant was diluted with pure water by 2000 times based on the mass, which was subjected to inductively coupled plasma atomic emission spectroscopy. Then, a value obtained by multiplying the obtained value 2000 times was taken as the dissolution concentration of the Si element [mass ppm] after 24 hours.

The evaluation results of the dissolution concentration of the Si element are shown in Table 2 below. Here, the results of the dissolution concentration of the Si element in the hardening aid solution are shown in the column of "Standing for 1 hour after adjustment", and the results of the dissolution concentration of the Si element in the hardening aid solution after 24 hours are shown in the column of "Standing for 24 hours after adjustment". As for the solution obtained by diluting the hardening aid solution with an aqueous alkaline solution, the results of the dissolution concentration of the Si element before the heat dissolution test are shown in the column of "Before heat dissolution test (solution diluted with aqueous alkaline solution)", and the results of the dissolution concentration of the Si element after the heat dissolution test are shown in the column of "After heat dissolution test (solution diluted with aqueous alkaline solution)".

[Q3 Rate in NMR peak ratio [%]]

The above hardening aid solution after preparation was allowed to stand in an ambient environment at 25°C for 1 hour, and then a part of the hardening aid solution was collected. The collected hardening aid solution was subjected to liquid state $^{29}$Si NMR measurement using a superconductive high-resolution nucleus magnetic resonance spectrometer (ECZ700R manufactured by JEOL RESONANCE Co., Ltd.) under conditions of Offset: -90 ppm, Sweep: 40 ppm, Points: 4096, Scans: 256, and Relaxation: 120 s.

From the results, each peak area of the peak derived from the Si element in a $SiO_4$ tetrahedron in which four of O elements are shared with adjacent Si elements (Q4), the peak derived from the Si element in a $SiO_4$ tetrahedron in which three of O elements are shared with adjacent Si elements (Q3), the peak derived from the Si element in a $SiO_4$ tetrahedron in which two of O elements are shared with adjacent Si elements (Q2), the peak derived from the Si element in a $SiO_4$ tetrahedron in which one O element is shared with an adjacent Si element (Q1), and the peak derived from the Si element in a $SiO_4$ tetrahedron in which all the O elements are not shared with adjacent Si elements (Q0) was calculated, and the proportion of the area of the peak derived from the Si element in the $SiO_4$ tetrahedron in which three of O elements are shared with adjacent Si elements (that is, the peak derived from a $Si-(OH)_1$ structure) (Q3) relative to the total area of these peak areas was taken as the Q3 rate [%].

Since the peak derived from the Si element in a $SiO_4$ tetrahedron in which all the O elements are shared with adjacent Si elements (Q4) was not observed in this measurement (the area was 0), the Q3 rate was the same value as the ratio of the Q3 value relative to the sum of the Q0 to Q3 values.

The evaluation results of the Q3 rate of the hardening aid solution are shown in Table 2 below.

[Table 1]

(Table 1) Raw materials and dissolution conditions of each hardening aid solution

| Hardening aid solution No. | Raw material | | | | | Dissolution conditions | Note |
|---|---|---|---|---|---|---|---|
| | Compound containing Si element | | Aqueous alkaline solution | | | | |
| | Type | Amount used [g] | Alkali type | Molality (number of moles of alkali present in 1 kg of water) [mol/kg] | Amount used [g] | | |
| 1 | Amorphous silica | 154 | KOH | 1 | 1646 | 80°C 5 hours | Comparative Example |
| 2 | Amorphous silica | 154 | KOH | 2 | 1646 | 80°C 5 hours | Present invention |
| 3 | Amorphous silica | 154 | KOH | 3 | 1646 | 80°C 5 hours | Present invention |
| 4 | Amorphous silica | 269 | KOH | 2 | 1531 | 80°C 5 hours | Present invention |
| 5 | Amorphous silica | 269 | KOH | 3 | 1531 | 80°C 5 hours | Present invention |
| 6 | Amorphous silica | 346 | KOH | 3 | 1454 | 80°C 5 hours | Present invention |
| 7 | Amorphous silica | 135 | KOH | 3 | 1665 | 80°C 5 hours | Present invention |
| 8 | Amorphous silica | 115 | KOH | 3 | 1685 | 80°C 5 hours | Present invention |
| 9 | Amorphous silica | 96 | KOH | 3 | 1704 | 80°C 5 hours | Present invention |
| 10 | Amorphous silica | 77 | KOH | 3 | 1723 | 80°C 5 hours | Comparative Example |
| 11 | No. 2 potassium silicate (aqueous $K_2SiO_3$ solution) (*1) | 752 | KOH | 3 | 1048 | 25°C 5 hours | Present invention |
| 12 | Amorphous silica | 12.2 | KOH | 3 | 121.2 | 25°C 48 hours | Comparative Example |
| 13 | Amorphous silica | 12.2 | NaOH | 3 | 121.2 | 35°C -25°C 48 hours (*2) | Comparative Example |
| 14 | Amorphous silica | 582 | KOH | 3 | 1218 | 25°C 5 hours | Comparative Example |

(continued)

| Hardening aid solution No. | Raw material | | | | | Dissolution conditions | Note |
|---|---|---|---|---|---|---|---|
| | Compound containing Si element | | Aqueous alkaline solution | | | | |
| | Type | Amount used [g] | Alkali type | Molality (number of moles of alkali present in 1 kg of water) [mol/kg] | Amount used [g] | | |
| 15 | Amorphous silica | 582 | KOH | 3 | 1218 | 25°C 24 hours | Comparative Example |
| (*1) Number of moles of potassium hydrate (KOH) present in 1 kg of water = 3 [mol/kg], concentration as $SiO_2$ 21.5% by mass. (*2) Temperature was gradually reduced so that the temperature was 35°C at the start and 25°C at the end. | | | | | | | |

[Table 2]

(Table 2) Evaluation results of each hardening aid solution

| Hardening aid solution No. | Molality of alkali (number of moles of alkali present in 1 kg of dispersion medium (water)) [mol/kg] | Dissolution concentration of Si element [mass ppm] | | | | Q3 rate [%] | Note |
|---|---|---|---|---|---|---|---|
| | | Standing for 1 hours after preparation | Before heat dissolution test (solution diluted with aqueous alkaline solution) | After heat dissolution test (solution diluted with aqueous alkaline solution) | Standing for 24 hours after preparation | | |
| 1 | 1 | 41700 | 20400 | 21300 | 41700 | 53.69 | Comparative Example |
| 2 | 2 | 40100 | 20000 | 19900 | 41200 | 57.59 | Present invention |
| 3 | 3 | 38400 | 19800 | 20000 | 39900 | 37.19 | Present invention |
| 4 | 2 | 72300 | 36700 | 38300 | 73800 | 85.96 | Present invention |
| 5 | 3 | 71800 | 35900 | 37300 | 69800 | 77.34 | Present invention |
| 6 | 3 | 92000 | 46000 | 47900 | 89100 | 87.39 | Present invention |
| 7 | 3 | 33900 | 17000 | 17800 | 34100 | not evaluated | Present invention |
| 8 | 3 | 27800 | 13900 | 14600 | 28700 | 22.86 | Present invention |
| 9 | 3 | 23800 | 11900 | 11500 | 24500 | not evaluated | Present invention |
| 10 | 3 | 18600 | 9300 | 9400 | 18700 | not evaluated | Comparative Example |
| 11 | 3 | 45300 | 22900 | 24400 | 46000 | 47.85 | Present invention |
| 12 | 3 | 36800 | 18400 | 24200 | 48000 | not evaluated | Comparative Example |

| Hardening aid solution No. | Molality of alkali (number of moles of alkali present in 1 kg of dispersion medium (water)) [mol/kg] | Dissolution concentration of Si element [mass ppm] | | | | Q3 rate [%] | Note |
|---|---|---|---|---|---|---|---|
| | | Standing for 1 hours after preparation | Before heat dissolution test (solution diluted with aqueous alkaline solution) | After heat dissolution test (solution diluted with aqueous alkaline solution) | Standing for 24 hours after preparation | | |
| 13 | 3 | 39300 | 19700 | 28100 | 56900 | not evaluated | Comparative Example |
| 14 | 3 | 38700 | 19900 | 78000 | 100900 | not evaluated | Comparative Example |
| 15 | 3 | 100000 | 50900 | 77100 | not evaluated due to high viscosity | not evaluated | Comparative Example |

<Self-hardening material and hardened body thereof>

[Preparation of surface activated fly ash]

50 g of a fly ash (average volume particle size: 20 $\mu$m, CaO content: 10.1% by mass or less) was put in a pot made of zirconia with a capacity of 500 mL, zirconia ball (diameter: 10 mm) was charged therein, and mechanochemical treatment was performed using a planetary ball mill apparatus (P-5 type, manufactured by fritsch) under conditions of a rotational speed of 300 rpm and a stimulation time of 6 hours to obtain a fly ash having an amorphized surface (surface amorphized FA) (CaO content: 10.1% by mass or less) which is the surface activated fly ash.

[Preparation of self-hardening material using fly ash having amorphized surface]

Each hardening aid solution obtained above was added to the surface amorphized FA obtained above and mixed, and the obtained mixture was stirred until a uniform state was able to be visually verified to prepare each self-hardening material. In the preparation of each self-hardening material, the amounts used of the surface amorphized FA and the hardening aid solution were determined such that the mass [parts by mass] of water (dispersing medium) in the self-hardening material based on 100 parts by mass of a total mass of the surface amorphized FA in the self-hardening material and the compound containing Si element (amorphous silica, or $SiO_2$ in potassium silicate (aqueous $K_2SiO_3$ solution) ) that was used as a raw material of the hardening aid solution (W/B) may take values shown in Table 3 and Table 4 below. Here, each hardening aid solution used was 24 hours after preparation.
In the preparation of the hardening aid solution 11, although an aqueous potassium silicate ($K_2SiO_3$) solution was used as the compound containing Si element which is a raw material, the mass value of $SiO_2$ contained therein was used for the calculation of W/B.

[Preparation of self-hardening material using non-treated fly ash]

To a fly ash not being subjected to mechanochemical treatment (non-treated fly ash) (average volume particle size: 20 $\mu$m, CaO content: 10.1% by mass or less), the hardening aid solution 6 obtained above was added and mixed, and the obtained mixture was stirred until a uniform state was able to be verified to prepare the self-hardening material 6'. Here, each hardening aid solution used was 24 hours after preparation. In the preparation of the self-hardening material, the amounts used of the non-treated fly ash and the hardening aid solution were determined such that the mass [parts by mass] of water (dispersing medium) in the self-hardening material based on 100 parts by mass of a total of the mass of the non-treated fly ash in the self-hardening material and the mass of the compound containing Si element (amorphous silica) that was used as a raw material of the hardening aid solution (W/B) may take values shown in Table 3 and Table 4 below.

[Production of hardened body]

Each self-hardening material obtained above was poured into a cylindrical formwork having a diameter (internal diameter) of 20 mm $\times$ a height of 40 mm, subjected to sealed curing at 40°C for 48 hours, then removed from the formwork, and thereafter, further subjected to dry curing at 40°C for 5 days to obtain a hardened body.

[Compressive strength of hardened body]

The upper and lower end surfaces of the hardened body was vertically formed and subjected to the unconfined compression test using a compression tester (AUTOGRAPH AG-100KNX manufactured by SHIMADZU CORPORATION), thereby measuring the compressive strength of the hardened body [N/mm$^2$]. Compressive strength of 8 [N/mm$^2$]or more was assessed that the strength was good. When the temporal stability of the hardening aid solution is high, the uniformity of the composition of the hardening aid solution is also high and the temporal stability and uniformity of the composition of the self-hardening material are also high, so that further high compressive strength of the hardened body can be obtained.
The evaluation results of the compressive strength of the hardened body of the self-hardening material at each W/B are shown in Table 3 below.

[Shape change rate of hardened body]

The diameter of each self-hardening material obtained above, immediately after being poured into a cylindrical formwork having a diameter (internal diameter) of 20 mm $\times$ a height of 40 mm was measured using a caliper. Then, the self-hardening material was subjected to sealed curing at 40°C for 48 hours, then removed from the formwork, and thereafter, further subjected to dry curing at 40°C for 5 days to obtain a hardened body. Subsequently, the diameter of the obtained hardened body was measured using a caliper. Then, the shape change rate [%] was calculated by the following expression. The lower the absolute value of the shape change rate is, the more preferred it is, and a value of 6 [%] or less was assessed that the dimensional change rate was good.

[Expression 1]

Shape change rate [%] = [(diameter of hardened body [mm] − diameter immediately after pouring [mm])/diameter immediately after pouring [mm]] × 100

The evaluation results of the shape change rate of the hardened body of the self-hardening material at each W/B are shown in Table 4 below.

[Table 3]

(Table 3) Compressive strength of hardened body of self-hardening material prepared using each hardening aid solution

| Self-hardening material No. | Hardening aid solution used to adjust self-hardening material | | | | Compressive strength of hardened body of self-hardening material [N/mm$^2$] | | | | | | | Note |
|---|---|---|---|---|---|---|---|---|---|---|---|---|
| | No. | Compound containing Si element as raw material | Molality of alkali (number of moles of alkali present in 1 kg of dispersion medium (water)) [mol/kg] | Dissolution con-centration of Si element (Stand-ing for 1 hour af-ter preparation) [mass ppm] | W/B=22.5 | W/B=25 | W/B=27.5 | W/B=30 | W/B=32.5 | W/B=35 | W/B=40 | |
| 1 | 1 | Amorphous silica | 1 | 41700 | not adjusted | 3.0 | 3.1 | 2.8 | not adjusted | 3.6 | 2.7 | Comparative Example |
| 2 | 2 | Amorphous silica | 2 | 40100 | not adjusted | 20.9 | 22.6 | 21.8 | not adjusted | 15.3 | 10.0 | Present invention |
| 3 | 3 | Amorphous silica | 3 | 38400 | 39.9 | 43.6 | 41.3 | 35.8 | 37.1 | 33.6 | 26.1 | Present invention |
| 4 | 4 | Amorphous silica | 2 | 72300 | not adjusted | not adjusted | 11.8 | 12.2 | not adjusted | 12.5 | 11.3 | Present invention |
| 5 | 5 | Amorphous silica | 3 | 71800 | not adjusted | 36.3 | 44.4 | 40.3 | not adjusted | 35.4 | 24.0 | Present invention |
| 6 | 6 | Amorphous silica | 3 | 92000 | not adjusted | 34.1 | 48.1 | 49.4 | 40.0 | 43.9 | 39.5 | Present invention |
| 7 | 7 | Amorphous silica | 3 | 33900 | not adjusted | 36.3 | 36.8 | 34.5 | not adjusted | 34.0 | 30.0 | Present invention |
| 8 | 8 | Amorphous silica | 3 | 27800 | not adjusted | 18.4 | 20.1 | 21.0 | not adjusted | 19.0 | 14.8 | Present invention |
| 9 | 9 | Amorphous silica | 3 | 23800 | not adjusted | 12.8 | 14.4 | 13.4 | not adjusted | 11.2 | 8.0 | Present invention |
| 10 | 10 | Amorphous silica | 3 | 18600 | not adjusted | 8.1 | 5.6 | 5.7 | not adjusted | 5.7 | 5.6 | Comparative Example |

| Self-harden-ing material No. | Hardening aid solution used to adjust self-hardening material | | | Compressive strength of hardened body of self-hardening material [N/mm$^2$] | | | | | | | Note |
|---|---|---|---|---|---|---|---|---|---|---|---|
| | No. | Compound containing Si element as raw material | Molality of alkali (number of moles of alkali present in 1 kg of dispersion medium (water)) [mol/kg] | Dissolution con-centration of Si element (Stand-ing for 1 hour af-ter preparation) [mass ppm] | W/B=22.5 | W/B=25 | W/B=27.5 | W/B=30 | W/B=32.5 | W/B=35 | W/B=40 | |
| 11 | 11 | No.2 potassium silicate (aqueous K$_2$SiO$_3$ solution) | 3 | 45300 | not adjusted | 38.8 | 41.6 | 42.9 | not adjusted | 31.9 | 22.7 | Present invention |
| 6' | 6 | Amorphous silica | 3 | 92000 | not adjusted | not adjusted | 21.4 | 26.4 | not adjusted | 27.5 | not adjusted | Present invention (no mechanochemical treatment) |

[Table 4]

[Table 4]

(Table 4) Shape change rate of hardened body of self-hardening material prepared using each hardening aid solution

| Self-hardening material No. | Hardening aid solution used to adjust self-hardening material | | | | Shape change rate of hardened body of self-hardening material [%] | | | | | | | Note |
| | No. | Compound containing Si element as raw material | Molality of alkali (number of moles of alkali present in 1 kg of dispersion medium (water)) [mol/kg] | Dissolution con-centration of Si element (Stand-ing for 1 hour af-ter preparation) [mass ppm] | W/B=22.5 | W/B=25 | W/B=27.5 | W/B=30 | W/B=32.5 | W/B=35 | W/B=40 | |
|---|---|---|---|---|---|---|---|---|---|---|---|---|
| 1 | 1 | Amorphous silica | 1 | 41700 | not adjusted | -0.6 | -0.8 | -0.8 | not adjusted | -1.9 | -3.1 | Comparative Example |
| 2 | 2 | Amorphous silica | 2 | 40100 | not adjusted | -0.6 | -0.9 | -0.5 | not adjusted | -1.5 | -1.3 | Present invention |
| 3 | 3 | Amorphous silica | 3 | 38400 | 0.3 | -0.5 | -0.3 | -0.7 | -0.7 | -0.5 | -0.8 | Present invention |
| 4 | 4 | Amorphous silica | 2 | 72300 | not adjusted | not adjusted | -0.7 | -1.3 | not adjusted | -1.9 | -2.8 | Present invention |
| 5 | 5 | Amorphous silica | 3 | 71800 | not adjusted | -2.4 | -1.9 | -3.1 | not adjusted | -3.3 | -4.0 | Present invention |
| 6 | 6 | Amorphous silica | 3 | 92000 | not adjusted | -1.3 | -2.0 | -2.2 | -2.6 | -3.0 | -6.0 | Present invention |
| 7 | 7 | Amorphous silica | 3 | 33900 | not adjusted | -0.1 | -0.1 | -0.1 | not adjusted | -0.3 | -0.3 | Present invention |
| 8 | 8 | Amorphous silica | 3 | 27800 | not adjusted | -0.2 | -0.1 | -0.2 | not adjusted | -0.3 | -0.4 | Present invention |
| 9 | 9 | Amorphous silica | 3 | 23800 | not adjusted | -0.2 | -0.3 | -0.2 | not adjusted | -0.3 | -0.4 | Present invention |
| 10 | 10 | Amorphous silica | 3 | 18600 | not adjusted | -0.3 | -0.2 | -0.4 | not adjusted | -0.3 | -0.4 | Comparative Example |

| Self-harden-ing material No. | Hardening aid solution used to adjust self-hardening material | | | | Shape change rate of hardened body of self-hardening material [%] | | | | | | | Note |
|---|---|---|---|---|---|---|---|---|---|---|---|---|
| | No. | Compound containing Si element as raw material | Molality of alkali (number of moles of alkali present in 1 kg of dispersion medium (water)) [mol/kg] | Dissolution concentration of Si element (Standing for 1 hour after preparation) [mass ppm] | W/B=22.5 | W/B=25 | W/B=27.5 | W/B=30 | W/B=32.5 | W/B=35 | W/B=40 | |
| 11 | 11 | No.2 potassium silicate (aqueous $K_2SiO_3$ solution) | 3 | 45300 | not adjusted | -1.5 | -1.8 | -2.0 | not adjusted | -2.4 | -2.4 | Present invention |
| 6' | 6 | Amorphous silica | 3 | 92000 | not adjusted | not adjusted | -0.2 | -0.3 | not adjusted | -0.8 | not adjusted | Present invention (no mechanochemical treatment) |

It was verified from the results of the above Table 1 to Table 3 that the hardening aid solutions 2 to 9 and 11 according to the present invention having a molality of alkali of 2 [mol/kg] or more, the dissolution concentration of the Si element of 20000 [mass ppm] or more, and a difference of the dissolution concentration of the Si element in the solution diluted with the aqueous alkaline solution between before and after heat dissolution of 2000 [mass ppm] or less had an absolute value of a difference between the dissolution concentration of the Si element after standing for 1 hour and the dissolution concentration of the Si element after standing for 24 hours of 2900 [mass ppm] or less, and the temporal stability of the dissolution concentration of the Si element was high. The value of the dissolution concentration of the Si element did not significantly vary even when the same test was performed by extending the time for standing, and the almost same results were obtained. In addition, the hardened bodies of the self-hardening materials prepared using the hardening aid solutions 2 to 9 and 11 according to the present invention were verified to have high compressive strength. In the case where the quality stability of a hardened body is high, the composition and uniformity of physical properties of the hardened body are high in comparison with a hardened body produced from the raw material having the same kind of composition, so that the strength of the hardened body tends to be high.

Further, regarding the case where the time from the preparation of the hardening aid solution until mixing with the object to be hardened in the preparation of the self-hardening material was changed, the following experiment was performed. Regarding the hardening aid solution No. 3 according to the present invention, the compressive strength of the hardened body obtained by preparing the self-hardening material of W/B = 40% using the solution 18 days after preparation was measured by the above method. Also, the compressive strength of the hardened body obtained by preparing the self-hardening material of W/B = 40% using the solution 65 days after preparation was measured by the above method. The compressive strength of the hardened body obtained by using the hardening aid solution No. 3, 18 days after preparation was 28.3 ($N/mm^2$), and the compressive strength of the hardened body obtained by using the hardening aid solution No. 3, 65 days after preparation was 26.1 ($N/mm^2$). As described in the above Table 3, the compressive strength of the obtained hardened body obtained using the hardening aid solution No. 3, 24 hours after preparation was 26.1 ($N/mm^2$). As seen above, regarding the hardening aid solution No. 3, the change in the compressive strength of the hardened body of the self-hardening material prepared using the hardening aid solution No. 3 was verified to be small even when the elapsed time was different. That is, it was verified that the quality stability of the hardened body was improved by using the hardening aid solution No. 3 having high temporal stability of the dissolution concentration of the Si element, also from the viewpoint of improving the temporal stability of the compressive strength of the hardened body of the self-hardening material. As for the hardening aid solutions 2, 4 to 9, and 11 according to the present invention having high temporal stability of the dissolution concentration of the Si element, it is presumed that the same results can be obtained, as in the hardening aid solution No. 3 according to the present invention.

On the other hand, it was verified from the results of the above Table 1 and the above Table 2 that the hardening aid solutions 12 to 14 being out of the scope of the present invention had an absolute value of the difference between the dissolution concentration of the Si element after standing for 1 hour and the dissolution concentration of the Si element after standing for 24 hours of 11200 [mass ppm], 17600 [mass ppm], and 62200 [mass ppm], respectively. In addition, the hardening aid solution 15 being out of the scope of the present invention was verified that the viscosity was increased and the concentration of the Si element was so significantly high that the dissolution concentration of the Si element after standing for 24 hours could not be accurately measured. Consequently, the hardening aid solutions 12 to 15 being out of the scope of the present invention were verified to be poor in temporal stability of the dissolution concentration of the Si element. The hardening aid solutions 12 to 15 have large temporal stability of the dissolution concentration of the Si element, and thus the insoluble residue of the compound containing Si element is considered to be present. It is presumed that, due to the presence of the insoluble residue, the uniformity of the composition of the hardening aid solution and the self-hardening material is reduced, and as a result, the uniformity of the composition and physical properties of the hardened body is reduced and the strength of the hardened body is reduced. As shown in the above Table 3, it is obvious that, in the case where the time from the preparation of the hardening aid solution until mixing with the object to be hardened in the preparation of the self-hardening material is changed, the hardened bodies of the self-hardening materials produced by using the hardening aid solutions 12 to 15 result in a change in the physical properties such as the compressive strength of the hardened body of the self-hardening material and poor quality stability.

Further, it was verified from the results of the above Table 1 to Table 3 that, while the hardening aid solutions 1 and 10 being out of the scope of the present invention have good temporal stability of the dissolution concentration of the Si element, the hardened bodies of the self-hardening materials prepared using these hardening aid solutions are poor in compressive strength.

The present application claims priority based on Japanese Patent Application No. 2020-092393 filed on May 27, 2020, which is incorporated herein by reference in its entirety.

**EP 4 159 700 A1**

**Claims**

1. A hardening aid solution comprising Si element, an alkali, and a dispersing medium, wherein

   the dispersing medium contains water;
   a dissolution concentration of the Si element is 20000 mass ppm or more;
   the number of moles of the alkali present in 1 kg of the dispersing medium is 2 mol/kg or more;
   an absolute value of an amount of change in a dissolution concentration of Si element in a solution obtained by diluting the hardening aid solution by 2 times based on the mass using an aqueous KOH solution having a concentration of 3 mol/L is 2000 mass ppm or less, between before and after a heat dissolution test including heating the solution at a solution temperature of 80°C for 5 hours, and then allowing the solution to stand in an ambient environment at 25°C for 1 hour; and
   the hardening aid solution is used for hardening a powder comprising a ceramic powder containing Si element at least on the surface thereof.

2. The hardening aid solution according to claim 1, wherein a silicate ion has a Q3 rate of 45% or less.

3. The hardening aid solution according to claim 1 or 2, wherein the alkali is at least one selected from the group consisting of a hydroxide of an alkali metal and a hydroxide of a group 2 metal.

4. The hardening aid solution according to any one of claims 1 to 3, wherein the ceramic powder containing Si element at least on the surface thereof comprises a ceramic powder having an amorphized surface and containing Si element at least on the surface thereof.

5. The hardening aid solution according to claim 4, wherein the ceramic powder having an amorphized surface and containing Si element at least on the surface thereof comprises a fly ash having an amorphized surface.

6. The hardening aid solution according to any one of claims 1 to 5, wherein the dissolution concentration of the Si element is 120000 mass ppm or less.

7. The hardening aid solution according to any one of claims 1 to 6, wherein the number of moles of the alkali present in 1 kg of the dispersing medium is 6 mol/kg or less.

8. A self-hardening material comprising the hardening aid solution according to any one of claims 1 to 7 and a ceramic powder containing Si element at least on the surface thereof.

9. The self-hardening material according to claim 8 comprising a powder having a CaO content of 15% by mass or less, wherein the powder having a CaO content of 15% by mass or less comprises the ceramic powder containing Si element at least on the surface thereof.

10. A hardened body being a hardened product of the self-hardening material according to claim 8 or 9.

11. A method for producing the hardening aid solution according to any one of claims 1 to 7, comprising mixing a compound containing Si element with an alkaline solution having the number of moles of alkali present in 1 kg of a dispersing medium of 2 mol/kg or more and containing water to obtain a mixed solution.

12. The method for producing the hardening aid solution according to claim 11, further comprising heating the mixed solution at a solution temperature of 80°C or more for 5 hours or more.

13. The method for producing the hardening aid solution according to claim 11 or 12, wherein the compound containing Si element is an amorphous silica.

14. The method for producing the hardening aid solution according to any one of claims 11 to 13, the method not comprising mixing a silicic acid alkali metal salt or a silicic acid group 2 metal salt.

15. A method for producing a self-hardening material comprising:

    providing the hardening aid solution according to any one of claims 1 to 7, or producing a hardening aid solution by the method according to any one of claims 11 to 14;
subjecting a ceramic powder containing Si element at least on the surface thereof to mechanochemical treatment; and
mixing the provided hardening aid solution or the produced hardening aid solution with the ceramic powder after the mechanochemical treatment.

16. The method for producing a self-hardening material according to claim 15, comprising further mixing with an aggregate after mixing the provided hardening aid solution or the produced hardening aid solution with the ceramic powder after the mechanochemical treatment.

17. The method for producing a self-hardening material according to claim 15 or 16, wherein the self-hardening material comprises a powder having a CaO content of 15% by mass or less, and the powder having a CaO content of 15% by mass or less comprises the ceramic powder containing Si element at least on the surface thereof.

18. A method for producing a hardened body comprising:

providing the self-hardening material according to claim 8 or 9, or producing a self-hardening material by the method for producing a self-hardening material according to any one of claims 15 to 17; and
hardening the provided self-hardening material or the produced self-hardening material.

19. The method for producing a hardened body according to claim 18, the method not comprising heat curing the self-hardening material after hardening at 50°C or more.

## INTERNATIONAL SEARCH REPORT

International application No.

PCT/JP2021/018413

A.  CLASSIFICATION OF SUBJECT MATTER
C04B 14/04(2006.01)i; C04B 18/08(2006.01)i; C04B 28/26(2006.01)i
FI: C04B28/26; C04B14/04 C; C04B18/08 Z
According to International Patent Classification (IPC) or to both national classification and IPC

B.  FIELDS SEARCHED

Minimum documentation searched (classification system followed by classification symbols)
C04B7/00-C04B28/36

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)
JSTPlus/JMEDPlus/JST7580 (JDreamIII)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2016-135723 A (YAMAGUCHI UNIVERSITY) 28 July 2016 (2016-07-28) claims, table 1, no. 5, paragraphs [0032], [0035] | 1, 3-11, 13-14, 18-19<br>15-17<br>2, 12 |
| Y | KATO, K. et al., "Surface modification of fly ash by mechano-chemical treatment", Ceramics International, 2019, vol. 45, no. 1, pp. 849-853 page 849, left column, lines 15-19 | 15-17 |
| A | JP 2004-219391 A (SEIMI CHEM CO., LTD.) 05 August 2004 (2004-08-05) paragraphs [0058]-[0065] | 1-19 |
| A | WO 2019/116124 A1 (THE CATHOLIC UNIVERSITY OF AMERICA) 20 June 2019 (2019-06-20) paragraphs [0076]-[0077] | 1-19 |
| A | JP 2015-218070 A (NAGOYA INSTITUTE OF TECHNOLOGY) 07 December 2015 (2015-12-07) claims | 1-19 |

☒ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
18 June 2021 (18.06.2021)

Date of mailing of the international search report
29 June 2021 (29.06.2021)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.

PCT/JP2021/018413

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-222528 A (OBAYASHI CORPORATION) 28 December 2016 (2016-12-28) claims | 1-19 |
| A | JP 9-168280 A (TOKAI RUBBER INDUSTRIES, LTD.) 24 June 1997 (1997-06-24) paragraph [0016] | 1-19 |

Form PCT/ISA/210 (continuation of second sheet) (January 2015)

**INTERNATIONAL SEARCH REPORT**
Information on patent family members

International application No.

PCT/JP2021/018413

| Patent Documents referred in the Report | Publication Date | Patent Family | Publication Date |
|---|---|---|---|
| JP 2016-135723 A | 28 Jul. 2016 | (Family: none) | |
| JP 2004-219391 A | 05 Aug. 2004 | US 2004/0139764 A1 paragraphs [0074]-[0081] CN 1502666 A | |
| WO 2019/116124 A1 | 20 Jun. 2019 | US 2019/0084882 A1 | |
| JP 2015-218070 A | 07 Dec. 2015 | (Family: none) | |
| JP 2016-222528 A | 28 Dec. 2016 | (Family: none) | |
| JP 9-168280 A | 24 Jun. 1997 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015218070 A
- JP 2016222528 A
- JP 2008239433 A
- JP 2020092393 A